Europäisches Patentamt

European Patent Office

Office européen des brevets

(19)

(11) Publication number: **0 256 673 B1**

(12) **EUROPEAN PATENT SPECIFICATION**

(45) Date of publication of patent specification: **29.01.92**  (51) Int. Cl.5: **C25B 11/08**

(21) Application number: **87306296.2**

(22) Date of filing: **16.07.87**

---

(54) **Cathode suitable for use in electrochemical processes evolving hydrogen.**

---

(30) Priority: **16.07.86 GB 8617325**

(43) Date of publication of application:
**24.02.88 Bulletin 88/08**

(45) Publication of the grant of the patent:
**29.01.92 Bulletin 92/05**

(84) Designated Contracting States:
**BE CH DE ES FR GB IT LI NL SE**

(56) References cited:
**EP-A- 0 059 854**
**DE-A- 1 567 718**
**FR-A- 1 152 911**
**GB-A- 2 074 190**

(73) Proprietor: **JOHNSON MATTHEY PUBLIC LIMITED COMPANY**
**New Garden House 78 Hatton Garden**
**London, EC1N 8JP(GB)**

(72) Inventor: **Willis, Peter Michael**
**21 Wantage Road**
**Wallingford Oxfordshire, OX10 0LR(GB)**
Inventor: **Phillips, Ralph Leslie**
**74 Windermere Road**
**Reading, Berkshire, RG2 7HR(GB)**

(74) Representative: **Arthur, Bryan Edward et al**
**Withers & Rogers 4 Dyer's Buildings Holborn**
**London EC1N 2JT(GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

This invention relates to a cathode suitable for use in an electrochemical process evolving hydrogen and to a process for making such a cathode.

The invention is particularly concerned with cathodes for a process such as the chloralkali process having a platinum group metal electrocatalyst deposited thereon. Such cathodes are described in US Patent Specification No. 4 414 071 the contents of which are incorporation herein by reference. This type of cathode can also be used in water electrolysis cells and in the electrolysis of other alkali metal hydroxides in which hydrogen is evolved at the cathode.

Problems are encountered in the chloralkali process with the electrocatalyst being poisoned particularly by iron ions which may be present in the raw materials used in the catholyte or are picked up from iron or steel pipework and tanks in the catholyte recycle loop. This can be partly alleviated by purifying the raw materials or by lining the pipework and tanks with a suitable inert material but both of these procedures are expensive.

A conventional steel cathode without any electrocatalyst has an over-potential of around 250-300mV at a current density of about 2.0 kA/m$^2$ at around 90$^\circ$C. A nickel cathode with a platinum-ruthenium electrocatalyst, as described in US Patent Specification No. 4414071, has an initial over-potential of around 50-100mV under similar conditions but this rapidly rises to over 150mV if the cathode is subjected to iron poisoning. Broadly speaking, it would thus be desirable to maintain the hydrogen over-potential of the cathode under similar conditions within the range 50-100mV despite the presence of iron ions.

European Patent Specification No. 0059854 and PCT Patent Specification No. WO 86/04364 describe cathodes having an electrocatalyst of one or more platinum group metals and a deposit of PTFE particles which increase the poison resistance of the cathode to iron ions.

According to a first aspect of the invention there is provided a cathode suitable for use in an electrochemical process evolving hydrogen, the cathode comprising an electrically conductive substrate made of a non-ferrous metal or having a coherent, non-porous coating of non-ferrous metal and an electrocatalyst comprising a deposition of platinum and ruthenium or precursors thereof on the conductive substrate and a deposition of at least one of the metals gold and silver in an amount in the range 0.1 to 11 wt% of the total weight of the platinum and ruthenium (including the metal content of the precursor), whereby the poison-resistance of the cathode to iron is increased as compared to a similar cathode without the gold or silver deposition.

According to a second aspect of the invention, there is provided a process for making a cathode as described above, the process comprising the deposition of platinum and ruthenium or precursors thereof onto an electrically conductive substrate made of a non-ferrous metal or having a coherent, non-porous coating of non-ferrous metal and the deposition of at least one of the metals gold and silver.

By "non-ferrous" in this specification and claims is meant a metal not comprising iron.

The deposition of gold onto a cathode suitable for use in electrochemical processes evolving hydrogen is disclosed in French Patent Specification No. 1152911 which describes a method of producing an activated coating for reducing the hydrogen over-potential of electrolytic hydrogen generator cathodes. The method involves the deposition of one or a plurality of the metals platinum, rhodium, palladium, osmium and iridium by immersion of an iron cathode in an aqueous solution of the precious metal salts. The incorporation of small quantities of gold in the activated coating is also said to make the coating more durable and the hydrogen over-potential lower.

However, this prior art does not address the problem of poisoning by iron. Indeed, it suggests the use of an iron substrate for the cathode and the iron released from this following attack by the caustic electrolyte is likely to exacerbate the problem of iron poisoning.

Tests have been carried out on the coatings described in French Patent Specification No. 1152911. A mild steel plate was shotblasted to roughen its surface and then immersed for 5 minutes in a solution containing 0.5g/l of platinum as chloroplatinic acid and 0.1 g/l of gold as chlorauric acid. The sheet was then dried and tested in the same manner as described below in relation to Example 1 but with 8.6ppm of iron in the catholyte to simulate iron poisoning. The initial over-potential was measured as 184 mV which shows a decrease compared to 280 mV for a similar shotblasted mild steel plate without any coating of platinum or gold. This indicates that a significant reduction in initial overpotential was achieved with the gold/platinum coating although this was less than that found for a ruthenium/platinum coating on a nickel substrate. However, the overpotential of the coating rose very rapidly (within twenty-four hours) to around 260 mV and stayed there for the duration of the experiment (in this case 1 week) indicating that the electrocatlayst was seriously poisoned by the presence of iron in the catholyte.

Preferred features of the invention will be apparent from the following description and from the subsidiary claims of the specification.

The invention will now be described, merely by way of example, with reference to the following drawings and examples :

Figure 1    shows part of a cathode according to one form of this invention; and

Figure 2    shows (on a larger scale) a section of the cathode taken on the line A-A of Figure 1;

Example 1    relates to a cathode with an electrocatalyst coating of platinum, ruthenium and gold according to one embodiment of the invention;

Example 2    relates to a cathode with an electrocatalyst coating of platinum, ruthenium, gold and PTFE according to a modified form of the first embodiment;

Example 3    relates to a cathode with an electrocatalyst coating of platinum, ruthenium and silver according to a second embodiment of the invention; and

Comparative Example A relates to a cathode similar to that of Example 1 but without the gold.

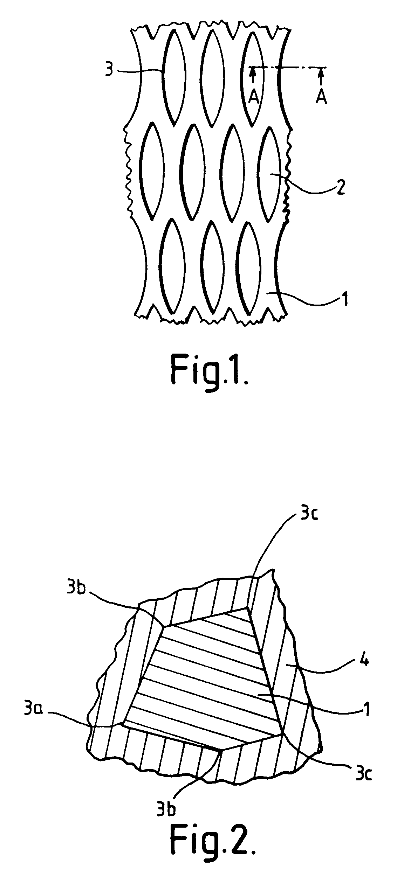

Figure 1 shows part of a cathode according to one form of the invention. The cathode comprises a nickel substrate 1 in the form of an expanded mesh made by stretching an apertured sheet of nickel. This type of mesh is widely used for cathodes of chloralkali cells and comprises a plurality of approximately elliptical apertures 2 having a number of very sharp edges 3.

The cross-section shown in Figure 2 shows the sharp edges 3 of the apertures 2 more clearly. One edge 3a subtends an internal angle of about 60°, two other edges 3b angles of about 130° and two further edges 3c angles of about 90°. An electrocatalyst coating 4 is shown on the substrate 1.

It has been found that the performance of the electrocatalyst is enhanced by the use of such a foraminate substrate having many sharp edges and points. Other examples of this type of substrate are plates having apertures and/or recesses stamped therein, and which may also have been crimped, and substrates formed by woven or knitted wire.

EXAMPLE 1

This Example illustrates the preparation and performance of a first embodiment of a cathode according to the invention. In this Example, the cathode is provided with an electrocatalyst coating of platinum, ruthenium and gold.

An apertured nickel substrate similar to that described in relation to Figures 1 and 2 was used in preparing the cathode. The substrate comprised about $1cm^3$ of a nickel (as determined by immersion in water) but occupied a space of about $3cm^3$ and contained a total of about 1000mm of sharp edges. The metal surrounding the apertures 2 was about 1mm thick. The substrate was grit blasted to roughen its surface, rinsed under a jet of high pressure water to flush away loose particles, washed in acetone to remove any grease, treated with 2N hydrochloric acid for one minute and then washed with de-ionised water.

Immediately after the wasing with de-ionised water, an electrocatalyst was provided on the activated substrate by immersing the substrate in a solution of chloroplatinic acid and ruthenium trichloride in de-ionised water maintained at room temperature for 20 minutes. The solution contained approximately 2g/l of platinum ions and approximately 2 g/l of ruthenium ions. During the immersion a mixture of platinum and ruthenium spontaneously deposited onto the substrate to produce an electrocatalyst coating of about $5.2g/m^2$ comprising a mixture of platinum and ruthenium in a weight ratio of from 3:1 to 4:1. The substrate bearing this electrocatalyst coating was removed from the solution, washed in warm (60°C) de-ionised water for one minute and allowed to dry in air. An adherent, durable platinum-ruthenium coating was thus formed on the substrate. Coating weights of between 0.1 and $20g/m^2$ can be formed by this method by a suitable variation of the parameters.

Gold was then deposited by immersing the substrate bearing the electrocatalyst coating in a solution of chlorauric acid in de-ionised water at room temperature for 20 minutes. The solution contained approximately 0.06g/l of gold ions. During the immersion, gold was spontaneously deposited thereby completing the electrocatalytic coating. The gold deposit amounted to about $0.16g/m^2$ which is around 3.1 wt% of the combined weight of the deposited platinum and ruthenium. Examination of the coating by secondary electron microscopy indicated that the gold is deposited in discrete centres so that a nodular growth is formed on top of the platinum-ruthenium coating. The cathode was finally washed in de-ionised water and allowed to dry.

The cathode was then tested in a poisoned catholyte of a type similar to that occuring in the chloralkali process in the manner described below :

The cathode prepared in Example 1 was used as the cathode of an electrochemical half-cell comprising a cathode compartment designed to simulate that of a static chloralkali cell and wherein the catholyte

EP 0 256 673 B1

comprised a 35 wt% solution of sodium hydroxide maintained at 90°C. To simulate iron poisoning, the catholyte also initially contained approximately 2.5ppm of iron ions as iron chloride. The current density employed was 2.0 kA/m$^2$ and the hydrogen over-potential of the cathode was measured using a conventional Luggin tube linked to a standard dynamic hydrogen electrode. The overpotential was measured at intervals during a period of operation and remained at a level below 100 mV as shown in Table 1. It can be seen that there was very little change in the hydrogen-overpotential over a period of 20 days indicating that the cathode had good resistance to poisoning by iron.

EXAMPLE 2

This Example illustrates how the performance of a cathode as prepared in Example 1 can be further improved by incorporating an organic polymer into the electrocatalytic coating.

The procedure of Example 1 was repeated except that the solution containing platinum and ruthenium ions also contained 20g/l of spheroidal PTFE particles having a number average maximum dimension of 0.2$\mu$m. This immersion of the substrate into the solution for 20 minutes at room temperature caused a spontaneous deposition of PTFE particles as well as the deposition of platinum and ruthenium. About 0.03 cm$^3$ of PTFE was deposited per square metre of the surface area of the substrate which is about 0.5 x 10$^{13}$ particles/m$^2$. A gold deposit was then formed in the same manner as in Example 1 and the cathode was tested in a similar manner to the tests conducted in Example 1. The results are shown in Table 1. It can be seen that there is small gradual increase in hydrogen-overpotential over a period of 20 days but that over this period the overpotential remained below 100mV which, as indicated above, is good by the standards of the chloralkali industry.

EXAMPLE 3

This Example illustrates the use of silver as an alternative to gold in a cathode similar to that prepared in Example 1. The procedure of Example 1 was repeated except that in order to produce a deposit of silver instead of gold, the solution of chlorauric acid was replaced by a solution of silver nitrate containing 0.06 g/l of silver ions. The silver deposit formed amounted to about 0.1g/m$^2$ which is around 1.9 wt% of the combined weight of the platinum and ruthenium in the coating. The cathode was tested in a similar way to that prepared Example 1 and the results are again shown in Table 1 from which can be seen that the hydrogen-overpotential remained at a level well below 100mV after 20 days showing that this cathode also had good resistance to poisoning by iron.

**COMPARATIVE EXAMPLE A**

The procedure of Example 1 was repeated except that the deposition of gold was omitted. The cathode was tested as before and the hydrogen-overpotentials measured are shown in Table 1. It can be seen that after only eight days the hydrogen- overpotential had reached 150mV which indicates that the electrocatalyst had been seriously poisoned by the presence of iron in the catholyte.

The platinum-ruthenium coating can be deposited by other techniques such as spraying so long as sufficiently durable, adherent coating is formed on the substrate. The platinum and ruthenium may be deposited in the form of precursors thereof such as the oxides which are then substantially reduced to the metallic form once they are used in the electrochemical process, for instance, in a chloralkali cell. It is believed that the process described in European Patent Specification No. 0129374 may be an example of an alternative way of forming the platinum-ruthenium coating. Although this describes a coating of platinum and ruthenium oxide, tests have shown this to comprise substantially platinum and ruthenium in the metallic form, at least after use in a chloralkali cell.

The gold or silver may be deposited by most standard deposition techniques such as sputter coating, electroplating, painting or spraying. Sputtering has the advantage that the amount of gold or silver deposited can be closely controlled and enables the required coating weight to be deposited in about 1 minute. Gold can also be deposited by means of a colloidal suspension of fine metallic particles. However, the preferred process comprises immersing the cathode in a solution containing gold or silver ions as described above, or spraying the solution onto the cathode, so that the spontaneous deposition of gold or silver occurs.

The mechanism for the deposition of the gold or silver is not fully understood but for the exchange deposition process described it is believed that the gold or silver is deposited onto the platinum-ruthenium coating and nickel from the substrate goes into solution. As mentioned above, the gold or silver tends to deposit in discrete centres and secondary electron micrographs have indicated a nodular growth of silver or

4

gold on top of the platinum-ruthenium coating. However, some of the gold may also deposit onto exposed portions of the nickel substrate and, in any case, the morphology of the coating is likely to alter during use due to its role in catalysing the reaction at the cathode and migration of the various species involved.

It has been found that substantial improvements in poison-resistance can be achieved with quite small deposits of gold. For example, the amount of gold deposited may be from 0.1 to 11 wt% (and preferably 1 to 6 wt%) of the total weight of platinum and ruthenium in the electrocatalyst coating (including the metal content of any precursor). Smaller amounts tend to be ineffective whereas heavier deposits do not adhere well to the cathode. Silver is effective in similar or even small amounts such as 1 to 2 wt% of the platinum-ruthenium coating.

The non-ferrous electrically conductive substrate should comprise material which has adequate electrical conductivity and corrosion resistance and which can receive an adherent deposit of platinum and ruthenium. Preferably, the substrate comprises a metal having an electrode potential below that of platinum and, of these, nickel is preferred because of its widespread acceptance for use in the chloralkali process. Alternatively, the substrate may comprise a core, for instance of stainless steel, provided with a coherent, non-porous coating of a non-ferrous metal such as nickel.

As illustrated by Example 2 above, the poison-resistance of cathodes can be further improved by providing the cathode with an electrocatalyst in which the platinum and ruthenium are mixed with particles of an organic polymer as well as the gold and/or silver deposit. Such cathodes are conveniently made by choosing an electrically conductive substrate comprising at least one metal (for example nickel) having an electrode potential below that of platinum, then contacting the substrate with a solution containing platinum and ruthenium and also containing particles or an organic polymer. This causes a spontaneous deposition of both the platinum and ruthenium and the organic polymer particles. The substrate coated in this way is then contacted with a solution containing ions of gold and/or silver whereby a spontaneous deposition of gold and/or silver occurs. Alternatively, the deposition of the platinum, ruthenium, the particles of organic polymer and the gold and/or silver may be produced simultaneously by contacting the substrate with a solution which contains ions of platinum, ruthenium and gold and/or silver as well as particles of the organic polymer although there is a tendency in this method for the plating solution to become unstable resulting in the precipitation of one or more species.

The polymer used may be an organic homopolymer or copolymer or mixture of polymers in the form of spherical or or spheroidal particles preferably capable of forming a lyophobic dispersion in an aqueous solution. Polytetrafluoroethylene (PTFE) is the preferred polymer because it has a high softening temperature and it readily forms an aqueous dispersion of spheroidal particles. Preferably, the aqueous dispersion contains from 0.5 to 40g/litre of PTFE particles. The number average size of the particles is preferably from 0.05 to 20$\mu$m and the polymer is preferably deposited in amounts as low as from 0.0005 to 0.3cm$^3$/m$^2$ of the surface area of the substrate prior to any surface roughening treatments. It is preferred that the organic particles form a monolayer and that not more than 30% of the particles should be contiguous so the number of particles deposited is preferably from 0.1 x 10$^{13}$ to 5 x 10$^{13}$/m$^2$ of the surface area of the substrate before roughening. This method of depositing PTFE particles is similar to that described in PCT Patent Specification WO 86/04364 which is incorporated herein by reference.

It should be noted that the UK Patent No. 2074190B describes and claims a cathode provided with a platinum-ruthenium electrocatalyst.

TABLE 1

| Example | Overpotential in mV after various periods (days) of testing | | | | | | | |
|---|---|---|---|---|---|---|---|---|
| No of days of testing | 0 | 1 | 2 | 5 | 8 | 10 | 15 | 20 |
| A | 30 | 42 | 43 | 110 | 150 | - | - | - |
| 1 | 92 | 90 | 90 | 82 | 84 | 94 | 86 | 93 |
| 2 | 24 | 26 | 34 | 38 | 44 | 34 | 62 | 48 |
| 3 | 60 | 58 | 88 | 60 | 64 | 57 | 45 | 78 |

## Claims

1. A cathode suitable for use in an electrochemical process evolving hydrogen, the cathode comprising an electrically conductive substrate made of a non-ferrous metal or having a coherent, non-porous coating of non-ferrous metal and an electrocatalyst comprising a deposition of platinum and ruthenium or precursors thereof on the conductive substrate and a deposition of at least one of the metals gold and silver in an amount in the range 0.1 to 11 wt% of the total weight of the platinum and ruthenium (including the metal content of any precursor), whereby the poison-resistance of the cathode to iron is increased as compared to a similar cathode without the gold or silver deposition.

2. A cathode as claimed in Claim 1 wherein the substrate comprises nickel.

3. A cathode as claimed in Claim 1 or Claim 2 wherein the electrocatalyst also comprises particles of an organic polymer.

4. A cathode as claimed in Claim 3 wherein the organic polymer is a polytetrafluoroethylene.

5. A process for making a cathode according to Claim 1, the process comprising the deposition of platinum and ruthenium or precursors thereof onto an electrically conductive substrate made of a non-ferrous metal or having a coherent, non-porous coating of non-ferrous metal and the deposition of at least one of metals gold and silver.

6. A process as claimed in Claim 5 in which the platinum and ruthenium are deposited by exchange deposition.

7. A process as claimed in Claim 5 or Claim 6 in which the gold and/or silver are deposited by exchange deposition.

8. A process as claimed in any of Claims 5, 6 or 7 in which the platinum and ruthenium are deposited first followed by deposition of the gold and/or silver.

**Revendications**

1. Cathode appropriée pour l'utilisation dans un procédé électrochimique avec dégagement d'hydrogène, la cathode comprenant un substrat conducteur électriquement réalisé à partir d'un métal non ferreux et ayant un revêtement cohérent non poreux de métal non ferreux et un électrocatalyseur comprenant un dépôt de platine et de ruthénium ou de leurs précurseurs sur le substrat conducteur et un dépôt d'au moins un des métaux or et argent dans une quantité située dans la plage de 0,1 jusqu'à 11 % en poids du poids total du platine et du ruthénium (comprenant la teneur en métal de tout précurseur), la résistance au poison de la cathode vis-à-vis du fer étant accrue par rapport à une cathode similaire sans le dépôt d'or ou d'argent.

2. Cathode selon la revendication 1, dans laquelle la substrat comprend du nickel.

3. Cathode selon la revendication 1 ou la revendication 2, dans laquelle un électrocatalyseur comprend également des particules d'un polymère organique.

4. Cathode selon la revendication 3, dans laquelle le polymère organique est un polytétrafluoréthylène.

5. Procédé pour réaliser une cathode selon la revendication 1, le procédé comprenant le dépôt de platine et de ruthénium ou de leurs précurseurs sur un substrat conducteur électriquement réalisé à partir d'un métal non ferreux ou ayant un revêtement cohérent non poreux de métal non ferreux et le dépôt d'au moins un des métaux or et argent.

6. Procédé selon la revendication 5, dans lequel le platine et le ruthénium sont déposés par dépôt d'échange.

7. Procédé selon la revendication 5 ou la revendication 6, dans lequel l'or et/ou l'argent sont déposés par dépôt d'échange.

8. Procédé selon l'une quelconque des revendications 5, 6 ou 7, dans lequel on dépose d'abord le platine et le ruthénium suivis du dépôt de l'or et/ou de l'argent.

**Patentansprüche**

1. Kathode, geeignet zur Verwendung bei einem elektrochemischen Verfahren, bei dem sich Wasserstoff entwickelt, wobei die Kathode ein elektrisch leitendes Substrat, das entweder aus einem Nichteisenmetall besteht oder das eine kohärente nicht poröse Beschichtung aus einem Nichteisenmetall aufweist, und einen Elektrokatalysator umfaßt, der eine Abscheidung von Platin und Ruthenium oder Vorläufern davon auf dem leitenden Substrat und eine Abscheidung von mindestens einem der Metalle Gold und Silber in einer Menge im Bereich von 0,1 bis 11 Gewichtsprozent des Gesamtgewichts von Platin und Ruthenium (einschließlich des Metallgehalts irgendeines Vorläufers) umfaßt, wobei die Vergiftungswiderstandsfähigkeit der Kathode gegenüber Eisen erhöht ist, verglichen mit einer ähnlichen Kathode ohne Ablagerung von Gold oder Silber.

2. Kathode nach Anspruch 1, worin das Substrat Nickel enthält.

3. Kathode nach Anspruch 1 oder Anspruch 2, worin der Elktrokatalysator auch Teilchen eines organischen Polymers enthält.

4. Kathode nach Anspruch 3, worin das organische Polymer Polytetrafluorethylen ist.

5. Verfahren zur Herstellung einer Kathode nach Anspruch 1, wobei das Verfahren umfaßt, daß man Platin und Ruthenium oder Vorläufer davon auf ein elektrisch leitendes Substrat, das entweder aus einem Nichteisenmetall besteht oder das eine kohärente nicht poröse Beschichtung aus einem Nichteisenmetall aufweist, abscheidet und mindestens eines der Metalle Gold und Silber abscheidet.

6. Verfahren nach Anspruch 5, bei dem Platin und Ruthenium durch Austauschabscheidung abgeschieden werden.

7. Verfahren nach Anspruch 5 oder Anspruch 6, worin Gold und/oder Silber durch Austauschabscheidung abgeschieden werden.

8. Verfahren nach einem der Ansprüche 5, 6 oder 7, bei dem Platin und Ruthenium zuerst abgeschieden werden und anschließend Gold und/oder Silber abgeschieden werden.

# Fig.1.

# Fig.2.